# EUROPEAN PATENT SPECIFICATION

(11) **EP 1 168 124 B1**
(45) Date of publication and mention of the grant of the patent: **01.03.2006**
(21) Application number: 01305111.5
(22) Date of filing: 12.06.2001
(51) Int. Cl.: G05B 19/05

(54) **Remote control system**
Fernsteuerungssystem
Système de télécommande

(30) Priority: 30.06.2000 JP 2000198943
(43) Date of publication of application: 02.01.2002
(73) Proprietor: SONY CORPORATION, Tokyo 141 (JP)
(72) Inventor: Terakado, Tomoko, Intellectual Property Dpt., Shinagawa-ku, Tokyo (JP); Miki, Nanami, Intellectual Property Departement, Shinagawa-ku, Tokyo (JP)
(74) Representative: Pilch, Adam John Michael

(56) References cited:
- WO-A-00/28436
- WO-A-00/38039
- US-A- 5 410 326

## Description

The present invention relates to control systems and remote controls, for example those capable of operating a plurality of electronic apparatuses by obtaining data about the electronic apparatuses, such as household electrical appliances.

Conventionally, household electrical appliances and audio-visual apparatuses, such as video cassette recorders (VCRs), televisions, air conditioners, and lighting apparatuses, are furnished with remote controls. These remote controls each have operation units and functions specific to each apparatus. However, there are also learning-type multifunctional remote controls in which the remote controls for a television and a VCR are integrated into a single remote control. These learning-type multifunctional remote controls have stored remote control signals for major manufacturers beforehand in memory. From among the stored remote control signals, a signal for an apparatus owned by a user is selected, and settings are performed.

In the learning-type remote controls, it is impossible to add additional operation buttons to those already installed at the beginning. Also, it is impossible to add additional functions or to change or delete functions stored in advance in the remote controls. In remote controls for apparatuses such as televisions and VCRs which possess the common functions, only operations common to both, such as power on/off, play, record, fast-forward, rewind, and the like are available in the single remote control. It has so far been impossible to integrate remote controls for home appliances, such as remote controls for an air conditioner and a VCR, which have different functions or different applications, into a single remote control.

Accordingly, it is an aim of at least an embodiment of the present invention to integrate the functions of remote controls for various household electrical apparatuses and audio-visual apparatuses into a single remote control and to allow easy changing of these functions.

International (PCT) Patent Application Publication No WO-A-0028436 discloses a control system according to the pre-characterising part of claim 1 hereof.

WO-A-0038039 discloses a touch screen for a remote control apparatus that comprises activation objects, one of which, if selected, displays a textual group of four tasking objects corresponding, respectively, to a TV, VCR, DVD and CD. If the user wishes to control the VCR (for example), he selects said one activation object and then selects that one of the tasking objects corresponding to the VCR. This causes display, among other things, of a VCR ON tasking object. When that object is selected, operation buttons (tasking objects) specific to the VCR are displayed.

The present invention provides a control system as set forth in claim 1 hereof.

According to a preferred embodiment of the invention described below, various information and data are downloaded from the server connected or linked to a plurality of electronic apparatuses to the control apparatus which, in the preferred embodiment, is a remote control. Thus, the single remote control can operate the electronic apparatuses and change data, such as a upgrading the version. Functions of remote controls for the electronic apparatuses are integrated into the single remote control, and the functions can be changed easily.

According to the preferred embodiment of the present invention, functions of remote controls for a plurality of home appliances are integrated into a single remote control. It is no longer necessary to possess a plurality of remote controls. When a new home appliance is purchased, it is only necessary to add remote control data concerning the purchased home appliance. When adding, changing, or deleting the functions of a remote control for each home appliance, it is only necessary to download the most recent data from a home server and to update the corresponding functions. The layout of a display screen of the remote control can also be changed, and hence users can rearrange the layout in accordance with their preferences.

The present invention will be described further, by way of example only, with reference to preferred embodiments thereof as illustrated in the accompanying drawings, in which:
Fig. 1 is a schematic diagram of a home network system in which a control apparatus according to an embodiment of the present invention is used to control home appliances;
Fig. 2 is an external view of the control apparatus according to the embodiment of the present invention;
Fig. 3 illustrates the arrangement of a display screen of the control apparatus according to the embodiment of the present invention: and
Fig. 4 is a block diagram of the internal structure of the control apparatus according to the embodiment of the present invention.

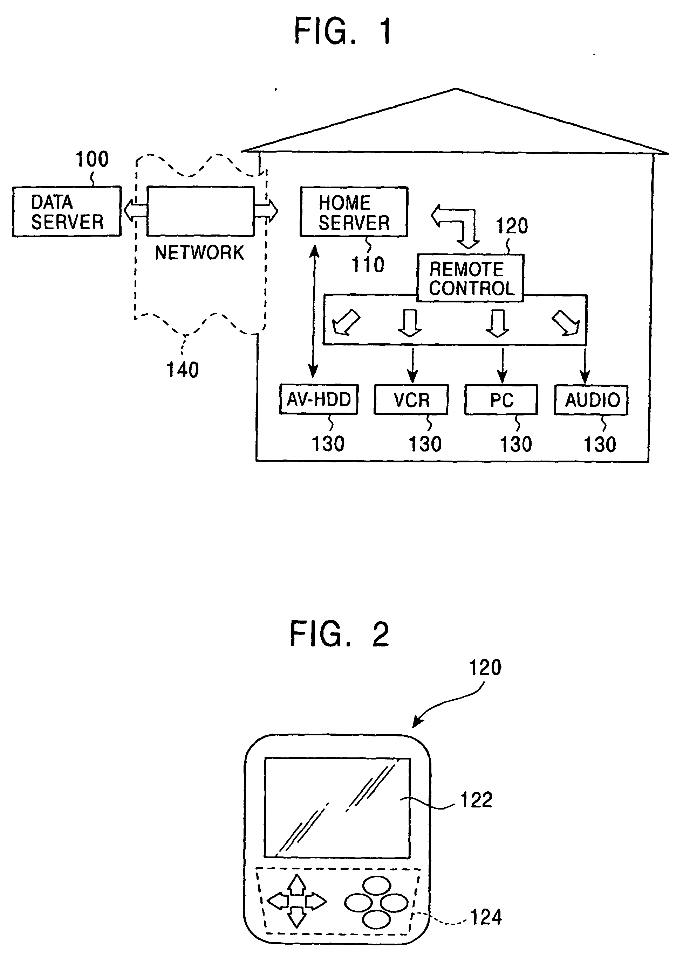

A home network shown in Fig. 1 includes a data server 100, which is a second server. The data server 100 is connected to a home server 110, which is a first server, through a network 140. The home server 110, i.e., the first server, is capable of communicating with a remote control 120, which is a control apparatus, and the home server 110 is connected or linked to a plurality of electronic apparatuses. The remote control 120 includes, at least, a display screen which can also be used as a touch panel, and the remote control 120 is linked to the electronic apparatuses. The electronic apparatuses are home appliances 130.

The data server 100, i.e., the second server, may be located at one place or at several places throughout the network 140. The data server 100 stores various control data, graphical user interface (GUI) data, internal processing data, display data, electronic program guide (EPG) data, and the like for the remote control 120 which controls the home appliances 130. The data are stored as extensible markup language (XML) meta-data or the like, and hence the data can be handled as the single type of data, regardless of the type of apparatus.

The home server 110, i.e., the first server, includes a connecting section for establishing a connection with the data server 100, a storing section for downloading and storing the data stored in the data server 100, and a communication section for establishing a connection or link with the home appliances 130 and performing wired or wireless data communication with the home appliances 130. Data downloading can be performed automatically or in response to an instruction given by the remote control 120 or a notification given by the data server 100. Connection between the home server 110 and the electronic apparatuses, namely, the home appliances 130, is established by establishing a link (i.LINK (trademark of Sony Corporation) in this embodiment) with a digital interface which conforms to the IEEE 1394 specification standard.

Referring to Fig. 2, the remote control 120, i.e., the control apparatus, includes a data obtaining unit for establishing a wired connection or a wireless link with the home server 110 and for obtaining various control data and GUI data, internal processing data, display data, EPG data, and the like for the remote control 120 which controls the home appliances 130. A display screen 122 displays the obtained data using an integrated screen. Operation keys 124 are used to operate the home server 110 and the home appliances 130.

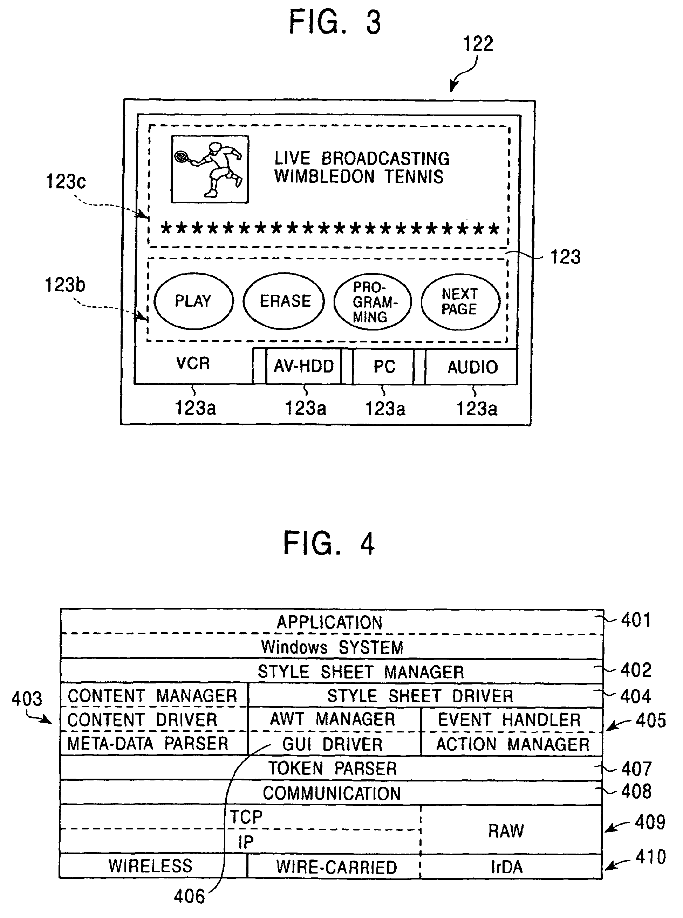

Referring to Fig. 3, the display screen 122 is integrated in such a manner that it is possible to view a single screen which combines operation panels 123 for the electronic apparatuses or the home appliances 130 such as a video cassette recorder (VCR), audio-visual hard disk drive (AV-HDD), personal computer (PC), and audio equipment. The operation panel 123 for the home appliance currently in use (VCR in the example shown in Fig. 3) is displayed in the foreground.

The operation panel 123 is a touch panel. The operation panel 123 includes index sections 123a for displaying the names of the home appliances 130, operation buttons 123b for operating the home appliances 130, and an information display section 123c for displaying information contained in the home appliances 130, such as the title of a song on a compact disk (CD) or the title of a program recorded in the AV-HDD, and EPG data. When operating a desired home appliance, the corresponding index section 123a is touched, and the corresponding operation panel 123 for the desired home appliance is displayed in the foreground.

Fig. 4 shows the internal structure of the remote control 120. As shown in Fig. 4, an application unit 401 includes application for managing a program which runs in the operation panels 123 for the home appliances 130, and a Windows system for controlling the operation panels 123. A style sheet manager 402 controls style sheets concerning GUI data. A content control unit 403 includes a control manager which displays and controls content displayed by the application unit 401, a content driver, and a meta-data parser. A style sheet driver 404 displays elements other than content, namely, the operation buttons 123b and text data area (the information display section 123c), and the style sheet driver 404 integrates actions in response to events. A key control unit 405 includes an event handler for performing key control of elements forming the screen and an action manager. A screen arrangement control unit 406 includes an AWT (Advances Windowing Toolkit) manager and a GUI driver and controls the screen arrangement. A token parser 407 classifies transmitted data as either content or elements (GUI parts) and performs settings. A communication unit 408 functions as an interface between a communication device 409 and other sections. The communication device 409 includes TCP, IP, and RAW, which rearrange transmitted data (packets) in order of transmission and perform error correction and packet transfer (route control). An interface 410 includes physical interfaces, namely, wireless, wire-carried, and IrDA interfaces, with wireless, wired, and infrared communication sections, respectively.

As shown in Fig. 1, the home appliances 130, i.e., the electronic apparatuses, include audio-visual equipment such as an HDD recorder, VCR deck, PC, and audio equipment. These home appliances 130 are connected to the home server 110 by a bus connection, daisy chain, or the like. In response to an instruction from the remote control 120, the home appliances 130 perform predetermined processing and download predetermined data from the home server 110. The type of home appliance is not limited to those described in this embodiment but can be any home appliance so long as it can be operated by remote control.

The operation of the home network system which includes the data server 100, the home server 110, the remote control 120, and the home appliances 130 is described with reference to Figs. 1 to 4.

The manner in which a remote control function of each of the home appliances 130 is installed or updated in the remote control 120 is described. From the data server 100, the home server 110 downloads and stores GUI data, internal processing data, and display data, which concern the display screen 122 of the remote control 120, and control data for the remote control 120 automatically or in response to an instruction from the remote control 120 or a notification from the data server 100.

The remote control 120 gains access to the home server 110 using wired or wireless communications, obtains the stored GUI data, internal processing data, display data, control data, and the like which are downloaded from the data server 100, and then updates the data. For example, when an additional button is added to the operation buttons 123b (play, erase, programming, and next page) shown in Fig. 3 or the operation buttons 123b are deleted or changed, or when a new home appliance is installed, the new button or the new home appliance is appended to the overall operation panels 123 shown in Fig. 3, and a new layout of the operation panels 123 is arranged and displayed. The layout can be changed in accordance with user's preferences.

Functions of each of the home appliances 130 are updated by instructions from the remote control 120. The home server 110 downloads new function data concerning the home appliance 130 from the data server 100 and stores the data automatically or in response to an instruction from the remote control 120 or a notification from the data server 100. When the remote control 120 gains access to the home server 110, the remote control 120 is notified that the new function data is stored, or the remote control 120 searches the data. Accordingly, the remote control 120 instructs the corresponding home appliance 130 to download the new function data from the home server 110 and to update the function.

The home appliance 130 receives the instruction from the remote control 120 and downloads the predetermined new function data from the home server 110 to which the home appliance 130 is connected by a bus connection or daisy chain. For example, the home appliance 130 overwrites the written contents of memory in the home appliance 130 and updates the function. Alternatively, the remote control 120 can instruct the home server 110 to transfer the stored new function data to the home appliance 130.

When the new function data is added and the function is updated by the home appliance 130, a new operation button or the like is also added to the remote control 120. In such a case, as described above, the remote control 120 obtains predetermined data from the home server 110 and updates the function.

Since the home appliance 130 is connected to the home server 110 by a bus connection or daisy chain, for example, the home appliance 130 can transfer information contained in the home appliance 130, such as the title of a song on a CD or the title of a program recorded in the AV-HDD, to the home server 110, and the home server 110 may in turn transfer the information to the remote control 120 to display the information on the display screen 122.

A case in which programming is performed to record a particular program based on the EPG data is described. The home server 110 downloads the EPG data from the data server 100 and stores the data automatically or in response to an instruction from the remote control 120 or a notification from the data server 100. The remote control 120 gains access to the home server 110 and obtains the EPG data.

The EPG data obtained by the remote control 120 is displayed on the display screen 122. After a user confirms the content of the program, the remote control 120 directly transfers the programming information to the home appliance 130 (VCR in this case) in order to record the desired program. Alternatively, the remote control 120 may instruct the home server 110 to perform programming to record the desired program, and the home server 110 in turn instructs the home appliance 130 to perform the programming to record the program.

## Claims

1. A control system comprising:
a control apparatus (120) for operating a plurality of predetermined electronic apparatuses, the control apparatus (120) comprising a touch display screen (122); and
a server (110) for communicating with said control apparatus (120), said server (110) being connected or linked to the plurality of electronic apparatuses;
wherein said control apparatus (120) can change settings of at least one of GUI data, internal processing data, and display data, which are contained in said control apparatus (120), based on at least one of GUI data, internal processing data, and display data, which are stored or designated by said server (110);
**characterised in that** said control apparatus (120) is operative to display, on said touch display screen (122), a plurality of index sections (123a) each displaying in the foreground a name of a respective one of the electronic apparatuses, and is responsive to the index section (123a) corresponding to any particular one of the electronic apparatuses being touched to display, in the foreground, a corresponding one of a plurality of operation panels (123) having operation buttons (123b) for operating that particular electronic apparatus

2. A control system according to claim 1, wherein said control apparatus (120) comprises a remote control.

3. A control system according to claim 1 or claim 2, wherein the control apparatus (120) is capable of operating a plurality of electronic apparatuses that comprise home appliances and audio-visual apparatuses.

4. A control system according to claim 1, claim 2 or claim 3, wherein the display screen (122) of said control apparatus (120) comprises a liquid crystal display screen.

5. A control system according to any one of the preceding claims, wherein said control apparatus (120) can transfer the information contained therein to said server (110) using wired or wireless communications.

6. A control system according to any one of the preceding claims, wherein communication data communicated between said control apparatus (120) and said server (110) comprise meta-data.

7. A control system according to any one of the preceding claims, wherein said server (110) includes control data for the electronic apparatuses, and said control apparatus (120) can receive the control data for specific electronic apparatus from said server (110) and use the data as internal processing data.

8. A control system according to any one of the preceding claims, wherein said control apparatus (120) can download data received from said server (110) to electronic apparatuses which are connected or linked to said server.

9. A control system according to claim 8, wherein the data includes an electronic program guide.

10. A control system according to any one of the preceding claims, comprising a link connection with a digital interface which conforms to the IEEE 1394 specification standard for connecting said server (110) and the electronic apparatuses.

11. A control system according to any one of the preceding claims, comprising a second server (100) for establishing a connection with the first-mentioned server (110) via a network (140).

12. A control system according to claim 11, wherein the network (140) comprises the Internet.

13. A control system according to any one of claims I to 4, comprising a second server (100) for establishing a connection with the first-mentioned server (110) via a network (140).

14. A control system according to claim 13, wherein the network (140) comprises the Internet.

15. A control system according to claim 13 or claim 14, wherein said first-mentioned server (110) can receive information recorded by said second server (100) through the network (140), and said first-mentioned server (110) can transfer the received information to said control apparatus (120) using wired or wireless communications.

16. A control system according to claim 13, claim 14 or claim 15, wherein communication data communicated among said control apparatus (120), said first-mentioned server (110), and said second server (100) comprise meta-data.

17. A control system according to any one of claims 13 to 16, wherein said first-mentioned server (110) includes control data for the electronic apparatuses, and said control apparatus (120) can receive the control data for a specific electronic apparatus from said first-mentioned server (110) and use the data as internal processing data.

18. A control system according to claim 17, wherein said second server can download the control data from said second server (100).

19. A control system according to any one of claims 13 to 18, wherein said control apparatus (120) can download data received from said first-mentioned server (110) to electronic apparatuses which are connected or linked to said first-mentioned server.

20. A control system according to claim 19, wherein the data includes data downloaded from said second server (100).

21. A control system according to claim 20, wherein the data includes an electronic program guide.

22. A control system according to any one of claims 11 to 20, wherein said control apparatus can download data from said second server (100) so that a new operation button (123b) or touch panel information for a new electronic apparatus can be appended to the touch panel (123).

## Patentansprüche

1. Steuersystem, mit
einer Steuervorrichtung (120) zum Bedienen mehrerer vorbestimmter elektronischer Geräte, wobei die Steuervorrichtung (120) einen Berührungsbildschirm (122) aufweist; und
einem Server (110) zum Kommunizieren mit der Steuervorrichtung (120),
wobei der Server (110) mit den mehreren elektronischen Geräten verbunden oder verlinkt ist,
wobei die Steuervorrichtung (120) Einstellungen wenigstens eines Elements von GUI-Daten, internen Verarbeitungsdaten und Anzeigedaten, die in der Steuervorrichtung (120) enthalten sind, basierend auf wenigstens einem Element von GUI-Daten, internen Verarbeitungsdaten und Anzeigedaten, die durch den Server (110) gespeichert oder bestimmt sind, ändern kann,
**dadurch gekennzeichnet,**
**dass** die Steuervorrichtung (120) wirksam ist, auf dem Berührungsbildschirm (122) mehrere Indexabschnitte (123a), die jeweils im Vordergrund einen Namen eines jeweiligen der elektronischen Geräte anzeigen, anzuzeigen, und auf den berührten Indexabschnitt (123a) entsprechend irgendeines speziellen der elektronischen Geräte reagiert, um im Vordergrund eine entsprechende von mehreren Bedientafeln (123) mit Bedienknöpfen (123b) zum Bedienen dieses speziellen elektronischen Geräts anzuzeigen.

2. Steuersystem nach Anspruch 1, bei welchem die Steuervorrichtung (120) eine Fernsteuerung aufweist.

3. Steuersystem nach Anspruch 1 oder Anspruch 2, bei welchem die Steuervorrichtung (120) in der Lage ist, mehrere elektronische Geräte, die Hausanwendungen aufweisen, und audiovisuelle Geräte zu bedienen.

4. Steuersystem nach Anspruch 1, Anspruch 2 oder Anspruch 3, bei welchem der Bildschirm (120) der Steuervorrichtung (120) einen Flüssigkristallbildschirm aufweist.

5. Steuersystem nach einem der vorherigen Ansprüche, bei welchem die Steuervorrichtung (120) die darin enthaltenen Informationen zum Server (110) mittels drahtgebundener oder drahtloser Kommunikationen übertragen kann.

6. Steuersystem nach einem der vorherigen Ansprüche, bei welchem die zwischen der Steuervorrichtung (120) und dem Server (110) kommunizierten Kommunikationsdaten Metadaten aufweisen.

7. Steuersystem nach einem der vorherigen Ansprüche, bei welchem der Server (110) Steuerdaten für die elektronischen Geräte enthält und die Steuervorrichtung (120) die Steuerdaten für ein bestimmtes elektronisches Gerät von dem Server (110) empfangen und die Daten als interne Verarbeitungsdaten benutzen kann.

8. Steuersystem nach einem der vorherigen Ansprüche, bei welchem die Steuervorrichtung (120) von dem Server (110) empfangene Daten zu elektronischen Geräten, die mit dem Server verbunden oder verlinkt sind, herunterladen kann.

9. Steuersystem nach Anspruch 8, bei welchem die Daten einen elektronischen Programmführer enthalten.

10. Steuersystem nach einem der vorherigen Ansprüche, mit einer Verbindung mit einer digitalen Schnittstelle, die dem Standard der Spezifikation IEEE 1394 entspricht, zum Verbinden des Servers (110) und der elektronischen Geräte.

11. Steuersystem nach einem der vorherigen Ansprüche, mit einem zweiten Server (100) zum Einrichten einer Verbindung mit dem erstgenannten Server (110) über ein Netz (140).

12. Steuersystem nach Anspruch 11, bei welchem das Netz (140) das Internet aufweist.

13. Steuersystem nach einem der Ansprüche 1 bis 4, mit einem zweiten Server (100) zum Einrichten einer Verbindung mit dem erstgenannten Server (110) über ein Netz (140).

14. Steuersystem nach Anspruch 13, bei welchem das Netz (140) das Internet aufweist.

15. Steuersystem nach Anspruch 13 oder Anspruch 14, bei welchem der erstgenannte Server (110) durch den zweiten Server (100) aufgezeichnete Informationen durch das Netz (140) empfangen kann und der erstgenannte Server (110) die empfangenen Informationen zu der Steuervorrichtung (120) mittels drahtgebundener oder drahtloser Kommunikationen übertragen kann.

16. Steuersystem nach Anspruch 13, Anspruch 14 oder Anspruch 15, bei welchem die zwischen der Steuervorrichtung (120), dem erstgenannten Server (110) und dem zweiten Server (100) kommunizierten Kommunikationsdaten Metadaten aufweisen.

17. Steuersystem nach einem der Ansprüche 13 bis 16, bei welchem der erstgenannte Server (110) Steuerdaten für die elektronischen Geräte enthält, und die Steuervorrichtung (120) die Steuerdaten für ein bestimmtes elektronisches Gerät von dem erstgenannten Server (110) empfangen und die Daten als interne Verarbeitungsdaten benutzen kann.

18. Steuersystem nach Anspruch 17, bei welchem der zweite Server die Steuerdaten von dem zweiten Server (100) herunterladen kann.

19. Steuersystem nach einem der Ansprüche 13 bis 18, bei welchem die Steuervorrichtung (120) von dem erstgenannten Server (110) empfangene Daten zu elektronischen Geräten, die mit dem erstgenannten Server verbunden oder verlinkt sind, herunterladen kann.

20. Steuersystem nach Anspruch 19, bei welchem die Daten von dem zweiten Server (100) herunter geladene Daten enthalten.

21. Steuersystem nach Anspruch 20, bei welchem die Daten einen elektronischen Programmführer enthalten.

22. Steuersystem nach einem der Ansprüche 11 bis 20, bei welchem die Steuervorrichtung Daten von dem zweiten Server (100) herunterladen kann, sodass ein neuer Bedienknopf (123b) oder Berührungsfeldinformationen für ein neues elektronisches Gerät dem Berührungsfeld (123) angehängt werden können.

## Revendications

1. Système de commande comprenant :
un appareil de commande (120) pour faire fonctionner une pluralité d'appareils électroniques prédéterminés, l'appareil de commande (120) comprenant un écran d'affichage tactile (122) ; et
un serveur (110) pour communiquer avec ledit appareil de commande (120), ledit serveur (110) étant raccordé ou lié à la pluralité d'appareils électroniques ;
dans lequel ledit appareil de commande (120) peut changer des réglages d'au moins une des données de GUI, des données de traitement interne, et des données d'affichage, qui sont contenues dans ledit appareil de commande (120), sur la base d'au moins une des données GUI, des données de traitement interne, et des données d'affichage, qui sont stockées ou désignées par ledit serveur (110) ;
**caractérisé en ce que** ledit appareil de commande (120) est fonctionnel pour afficher, sur ledit écran d'affichage tactile (122), une pluralité de sections d'index (123a) chacune affichant dans l'arrière-plan un nom de celui respectif des appareils électroniques, et est sensible à la section d'index (123a) correspondant à celui particulier quelconque des appareils électroniques étant touchés sur l'affichage, dans l'arrière-plan, et celui correspondant d'une pluralité de panneaux d'exploitation (123) ayant des boutons de fonctionnement (123b) pour faire fonctionner cet appareil électronique particulier.

2. Système de commande selon la revendication 1, dans lequel ledit appareil de commande (120) comprend une télécommande.

3. Système de commande selon la revendication 1 ou 2, dans lequel l'appareil de commande (120) est capable de faire fonctionner une pluralité d'appareils électroniques qui comprennent des appareils domestiques et des appareils audiovisuels.

4. Système de commande selon la revendication 1, la revendication 2 ou la revendication 3, dans lequel l'écran d'affichage (122) dudit appareil de commande (120) comprend un écran d'affichage à cristaux liquides.

5. Système de commande selon l'une quelconque des revendications précédentes, dans lequel ledit appareil de commande (120) peut transférer les informations contenues dans celui-ci audit serveur (110) utilisant en des communications filaires ou sans fil.

6. Système de commande selon l'une quelconque des revendications précédentes, dans lequel des données de communication communiquées entre ledit appareil de commande (120) et ledit serveur (110) comprennent des méta-données.

7. Système de commande selon l'une quelconque des revendications précédentes, dans lequel ledit serveur (110) comprend des données de commande pour les appareils électroniques, et ledit appareil de commande (120) peut recevoir des données de commande pour un appareil électronique spécifique à partir dudit serveur (110) et utilise les données comme des données de traitement interne.

8. Système de commande selon l'une quelconque des revendications précédentes, dans lequel ledit appareil de commande (120) peut télécharger des données reçues à partir dudit serveur (110) dans des appareils électroniques qui sont raccordés ou liés audit serveur.

9. Système de commande selon la revendication 8, dans lequel les données comprennent un guide de programme électronique.

10. Système de commande selon l'une quelconque des revendications précédentes, comprenant une connexion de liaison avec une interface numérique qui est conforme à la norme de spécification IEEE 1394 pour raccorder ledit serveur (110) et les appareils électroniques.

11. Système de commande selon l'une quelconque des revendications précédentes, comprenant un second serveur (100) pour établir une connexion avec le serveur mentionné en premier (110) via un réseau (140).

12. Système de commande selon la revendication 11, dans lequel le réseau (140) comprend l'Internet.

13. Système de commande selon l'une quelconque des revendications 1 à 4, comprenant un second serveur (100) pour établir une connexion avec le serveur mentionné en premier (110) via un réseau (140).

14. Système de commande selon la revendication 13, dans lequel le réseau (140) comprend l'Internet.

15. Système de commande selon la revendication 13 ou la revendication 14, dans lequel ledit serveur mentionné en premier (110) peut recevoir des informations raccordées audit second serveur (100) à travers le réseau (140), et ledit serveur mentionné en premier (110) peut transférer les informations reçues audit appareil de commande (120) en utilisant des communications filaires ou sans fil.

16. Système de commande selon la revendication 13, la revendication 14 ou la revendication 15, dans lequel des données de communication communiquées en même temps que ledit appareil de commande (120), ledit serveur mentionné en premier (110) et ledit second serveur (100) comprennent des méta-données.

17. Système de commande selon l'une quelconque des revendications 13 à 16, dans lequel ledit serveur mentionné en premier (110) comprend des données de commande pour les appareils électroniques, et ledit appareil de commande (120) peut recevoir les données de commande pour un appareil électronique spécifique à partir dudit serveur mentionné en premier (110) et utilise des données comme des données de traitement interne.

18. Système de commande selon la revendication 17, dans lequel ledit second serveur peut télécharger les données de commande à partir dudit second serveur (100) .

19. Système de commande selon l'une quelconque des revendications 13 à 18, dans lequel ledit appareil de commande (120) peut télécharger des données reçues à partir dudit serveur mentionné en premier (110) dans des appareils électroniques qui sont reliés ou liés audit serveur mentionné en premier.

20. Système de commande selon la revendication 19, dans lequel les données comprennent des données téléchargées à partir dudit second serveur (100).

21. Système de commande selon la revendication 20, dans lequel les données comprennent un guide de programme électronique.

22. Système de commande selon l'une quelconque des revendications 11 à 20, dans lequel ledit appareil de commande peut télécharger des données à partir dudit second serveur (100) pour qu'un nouveau bouton d'actionnement (123b) ou des informations de panneau tactile pour un nouvel appareil électronique puissent être ajoutés au panneau tactile (123).
